# EUROPÄISCHE PATENTSCHRIFT

(11) **EP 1 661 875 B1**
(45) Veröffentlichungstag und Bekanntmachung des Hinweises auf die Patenterteilung: **29.06.2011**
(21) Anmeldenummer: 05025931.6
(22) Anmeldetag: 29.11.2005
(51) Int. Cl.: C05B 17/00, C05B 13/00

(54) **Verfahren zur Herstellung eines phosphorhaltigen Düngemittels aus Tiermehl**
Method for producing a phosphorous-containing fertiliser from animal meal
Procédé pour produire un engrais contenant du phosphore issu de farine animale

(30) Priorität: 30.11.2004 DE 102004057644
(43) Veröffentlichungstag der Anmeldung: 31.05.2006
(73) Patentinhaber: VTS Koop Schiefer GmbH & Co. Thüringen KG, 07330 Unterloquitz (DE)
(72) Erfinder: Jakob, Wolfgang, 07330 Probstzella (DE); Knopf, Ulrich, 07318 Wickersdorf (DE); Noack, Bernd, 07318 Saalfeld (DE); Stoll, Horst-Christian, 07330 Unterloquitz (DE)
(74) Vertreter: Liedtke, Klaus

(56) Entgegenhaltungen:
- EP-A- 1 258 467
- US-A1- 2004 025 715
- US-B1- 6 468 943

## Beschreibung

Die Erfindung betrifft ein Verfahren zur Herstellung eines phosphorhaltigen Düngemittels aus Tiermehl.

Phosphor zählt zu den Hauptnährstoffen von Pflanzen und Tieren und ist in seiner physiologischen Funktion durch keinen anderen Stoff zu ersetzen. Derzeit werden Phosphatdüngemittel industriell nahezu ausschließlich aus Phosphaten mineralischen Ursprungs hergestellt. Diese werden hauptsächlich in Afrika und Asien aus sedimentären und magmatischen Lagerstätten gewonnen. Es zeichnet sich ab, dass diese Vorräte weltweit knapper werden. Erhöhter Aufwand bei deren Gewinnung infolge abnehmender Qualität der noch verfügbaren Vorräte durch beispielsweise höheren Schwermetallgehalt und zunehmend erschwerte Abbaubedingungen bedingen höhere Rohstoffpreise. Dadurch gewinnt die Rückgewinnung von Phosphaten zunehmend an Bedeutung, die bisher aus dem Nutzungskreislauf bei der Abfallentsorgung ausscheiden.

Bekannt ist hier z.B. die Verwertung von phospathaltigen Klärschlämmen aus der DE 102 43 840 B4 , wobei diese getrocknet und unter vergleichsweise hohem Energieeinsatz verbrannt werden und der entstandenen Asche unter erneutem Einsatz von Energie und Zusatzstoffen umweltrelevante Schwermetalle entzogen und vorhandene Phosphate pflanzenverfügbar gemacht werden. Eine hohe Pflanzenverfügbarkeit ist erforderlich, um ausgeglichene Bilanzen zwischen Phosphoraustrag über die Pflanzenernte und Phosphoreintrag über das Düngemittel zu erreichen. Aus der DE 26 016 76 A1 ist zusätzlich die Verwertung von Abfällen tierischer Herkunft bekannt, wobei hier ebenfalls unter erneutem Energieeinsatz und Verwendung von Zuschlagstoffen die erhaltenen Phosphorverbindungen pflanzenverfügbar gemacht werden. Eine weitere Möglichkeit ist die Verwendung von Tiermehl. In Deutschland und einigen anderen Ländern ist die Verwertung von Schlachthofabfällen, sowie verendeten Nutz-, Haus- und Labortieren in einem aufwendigen Verfahren vorgeschrieben. Das Ausgangsmaterial wird zunächst in Grob- oder Feinbrechern in ca. 50 g bzw. 20 g schwere Stücke zerkleinert. Anschließend wird es zur Sterilisierung bis zum Zerfall gekocht und dann unter 1,3 bar Dampfdruck 20 min. bei 133 °C nachbehandelt. Schließlich wird das Fett entfernt und das Material getrocknet. Im letzten Schritt wird das Material gemahlen. Das Resultat dieses Prozesses ist Tiermehl, ein sekundärer Rohstoff, der auf unterschiedlich Weise genutzt werden kann, in der Vergangenheit überwiegend als Eiweißfuttermittel in der Tierzucht. Die BSE- und MKS-Krise hat dazu geführt, dass Tiermehl seit Inkrafttreten des Verfütterungsverbotes nicht mehr an Nutztiere verfüttert werden darf und somit nicht mehr verwertbar war. Eine direkte Verwendung als Dünger ist wegen der möglichen Belastung mit Krankheitserregern nicht ratsam. Aufgrund des hohen Heizwertes von Tiermehl, der mit dem der Braunkohle vergleichbar ist, bietet sich eine Nutzung zur Energiegewinnung durch Verbrennung an. Wegen seiner guten Fördereigenschaften und der mehlartigen Konsistenz ist die Verbrennung von Tiermehl trotz des Herstellungsaufwandes vorteilhafter als die direkte Verbrennung unbehandelter Abfälle tierischer Herkunft, wie sie aus der DE 26 016 76 A1 bekannt ist. Durch einen optimal geführten thermischen Prozess kann dabei weitgehend sicher gestellt werden, dass vorhandene organische Schadstoffe und infektiöse Keime sowie andere hygienische Belastungen zerstört werden. Bestimmte, niedrig siedende anorganische Stoffe können dem Prozess über den Gaspfad entzogen werden. Bei der überwiegend praktizierten Mischverbrennung mit Abfällen oder anderen Energieträgern wird zwar der Heizwert des Tiermehls genutzt, jedoch geht hierbei der Phosphor als Rohstoff verloren, da seine Konzentration in den entstehenden Aschen gering und diese mit anorganischen Schadstoffen verunreinigt sind, wodurch seine Rückgewinnung unwirtschaftlich wird. Die bei einer Monoverbrennung entstehenden Aschen, wie aus der EP 1 258 467 A2 bekannt, sind hingegen weitgehend frei von anorganischen Schadstoffen und enthalten Phosphor-Anteile von bis zu 40%, allerdings in Verbindungen, die zunächst nicht pflanzenverfügbar sind, vorwiegend Hydroxylapatit und Whitlockit. Um diese Pflanzenverfügbarkeit zu erreichen, findet dort eine energieaufwendige und damit unwirtschaftliche Nachbehandlung der entstandenen Aschen statt.

In der Entgegenhaltung US 6468943 B1 werden ein künstliches Pflanzenaufzucht-Material und ein Verfahren zu dessen Herstellung beschrieben. Die Besonderheit des dort beschriebenen Materials besteht darin, dass ein poröser gesinterter Körper (Granulat) hergestellt wird, in den unterschiedliche Substanzen eingelagert werden. Ausgehend von Kieselerde oder Tonerde als Hauptbestandteile wird ein poröser Körper durch Sinterung erzeugt, in den Substanzen wie beispielsweise Kalziumphosphat aus Knochenmaterial eingelagert wird.

Der Erfindung liegt die Aufgabe zu Grunde, ein verbessertes Verfahren zur Herstellung eines phosphorhaltigen Düngers aus Tiermehl anzugeben.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Es ist auch möglich, dass einzelne der in den Ansprüchen angegebenen Merkmale miteinander kombiniert werden können.

Im erfindungsgemäßen Verfahren wird das Tiermehl durch Vermischen mit Alkali- und/oder Erdalkali- und/oder Quarzverbindungen so konditioniert, dass bereits das Verbrennungsprodukt möglichst weitgehend pflanzenverfügbare Phosphorformen enthält. Durch seinen hohen Heizwert liefert das Tiermehl selbst bei der Verbrennung die Prozessenergie. Die Verbrennung findet bei mindestens 1100 °C statt, wodurch vorhandene organische Schadstoffe, infektiöse Keime sowie andere hygienische Belastungen sicher zerstört werden, und die Wandlung in hohe Anteile pflanzenverfügbarer Phosphorverbindungen diesen Temperaturbereich erfordert.

Die Abwärme des Prozesses wird in einem anderen Prozess verwendet , was zu einer effizienteren Energienutzung führt. Werden dabei die Abgase des Verbrennungsprozesses genutzt, entfällt für diesen die anderenfalls notwendige separate Rauchgasreinigung, da diese dann mit den Abgasen des anderen Prozesses zusammen stattfinden kann.

Die Verbrennung findet in einem Drehrohrofen statt, da dort der Wärmeübergang in das Einzelkorn vorteilhaft ist und die ständige Durchmischung der eingesetzten Materialien die chemische Reaktion unterstützt.

Vorteilhafterweise werden sowohl das Tiermehl als auch die zugesetzten Alkali- und/oder Erdalkaliverbindungen dem Prozess in Pulverform zugeführt, um deren reaktionswirksame Oberfläche zu vergrößern.

Die Granulierung des gemahlenen Verbrennungsproduktes unter Zusatz eines Granulierhilfsmittels hat den Vorteil , dass der dabei entstehende Dünger besser dosierbar ist und nicht staubt, insbesondere bei einer Zielkorngröße von 1 bis 4 mm.

Bevorzugt werden die zugeführten Alkali und/oder Erdalkali- und/oder Quarzverbindungen sowie die Granulierhilfsmittel in Form geeigneter Abfall- oder Reststoffe zugegeben bzw. aus diesen gewonnen. Hier kann insbesondere auch Feinschiefer zum Einsatz kommen.

Um die reaktionswirksame Oberfläche der der Verbrennung zuzuführenden Komponenten zusätzlich zu erhöhen und somit zu aktivieren, werden diese zuvor vorteilhafterweise feinstgemahlen.

In einer möglichen Ausführungsform des Verfahrens werden sowohl das Tiermehl als auch die Alkali- und/oder Erdalkali- und/oder Quarzverbindungen dem Prozess in granulierter Form zugeführt, so dass der zusätzliche Granulierungsschritt entfallen kann.

Als vorteilhaft erweist sich die Beimischung von elementarem Schwefel zum Verbrennungsprodukt, da hierdurch beim Einsatz des Düngers im Boden ein mikrobiell induzierter In-Situ-Aufschluss im Verbrennungsprodukt enthaltene schwerlösliche Calciumphosphate in wasserlösliche Phosphate überführt.

Die Erfindung wird im Folgenden anhand eines Ausführungsbeispiels erläutert.

Einem Drehrohrofen wird eine Materialmischung aus Tiermehl, Feinschiefer und weiteren Alkali- und/oder Erdalkali- und/oder Quarzverbindungen zur Verbrennung bei 1100 °C im stöchiometrischen Verhältnis zugeführt. Bei dieser Temperatur findet sowohl die sichere Zerstörung aller im Tiermehl vorhandenen organischen Schadstoffe, infektiöser Keime sowie anderer hygienischer Belastungen als auch die Umwandlung schlecht löslicher in pflanzenverfügbare Phosphorverbindungen statt. Die Prozessenergie wird dabei durch das Tiermehl selbst bereitgestellt. Die entstehenden Rauchgase werden einem weiteren Prozess zugeführt, der ihre Wärme als Prozesswärme nutzt und gemeinsam mit dessen Abgasen der Rauchgasreinigung unterzogen. Das dem Drehrohrofen entnommene Verbrennungsprodukt wird mit Feinschiefer und anderen Granulierhilfsmitteln sowie mit elementarem Schwefel versetzt, aufgemahlen und in eine für Düngemittelgranulate typische Zielkorngröße von 0,5 bis 4 mm granuliert.

## Patentansprüche

1. Verfahren zur Gewinnung eines phosphorhaltigen Düngemittels aus Tiermehl, **dadurch gekennzeichnet, dass** das Tiermehl mit Alkali- und/oder Erdalkali- und/oder Quarzverbindungen zu einer Materialmischung vermischt wird und diese anschließend bei einer Temperatur von mindestens 1100 °C in einem Drehrohrofen verbrannt wird, wobei das Tiermehl mindestens einen Teil der für die Verbrennung notwendigen Energie selbst liefert und eine Nutzung der Prozesswärme in einem weiteren Prozess erfolgt

2. Verfahren nach Anspruch 1, **dadurch gekennzeichnet, dass** die Materialmischung dem Reaktor in Pulverform zugeführt wird.

3. Verfahren nach Anspruch 1, **dadurch gekennzeichnet, dass** die Materialmischung dem Reaktor in granulierter Form zugeführt wird.

4. Verfahren nach Anspruch 3, **dadurch gekennzeichnet, dass** die dem Reaktor in granulierter Form zugeführte Materialmischung eine Korngröße im Bereich von 0,5 bis 4 mm aufweist.

5. Verfahren nach einem der vorhergehenden Ansprüche, **dadurch gekennzeichnet, dass** das Verbrennungsprodukt gemahlen und anschließend unter Zusatz eines Granulierhilfsmittels granuliert wird.

6. Verfahren nach Anspruch 5, **dadurch gekennzeichnet, dass** die Granulierung mit einer Korngröße im Bereich von 0,5 bis 4 mm erfolgt.

7. Verfahren nach einem der vorhergehenden Ansprüche, **dadurch gekennzeichnet, dass** die Alkali- und/oder Erdalkali- und/oder Quarzverbindungen und/oder das Granulierhilfsmittel zumindest teilweise in Form geeigneter Abfall- und/oder Reststoffe oder daraus gewonnener Substanzen zugegeben werden.

8. Verfahren nach Anspruch 7, **dadurch gekennzeichnet, dass** die Alkali- und/oder Erdalkali- und/oder Quarzverbindungen und/oder das Granulierhilfsmittel zumindest teilweise in Form von Feinschiefer oder daraus gewonnener Substanzen zugegeben werden.

9. Verfahren nach einem der vorhergehenden Ansprüche, **dadurch gekennzeichnet, dass** die Materialmischung und/oder das Granulierhilfsmittel durch Feinstmahlung mechanisch aktiviert werden.

10. Verfahren nach einem der vorhergehenden Ansprüche, **dadurch gekennzeichnet, dass** dem Verbrennungsprodukt elementarer Schwefel zugesetzt wird.

## Claims

1. Method for producing a phosphorous-containing fertilizer from meat and bone meal, **characterized in that** the meat and bone meal is mixed with alkali compounds and/or alkaline earth compounds and/or quartz compounds resulting in a material mixture which is subsequently combusted in a rotary kiln at a temperature of at least 1100 °C, whereas the meat and bone meal provides at least a part of the energy which is needed for combustion and process heat is used in another process.

2. The method according to claim 1, **characterized in that** the material mixture is fed to the reactor in powder form.

3. The method according to claim 1, **characterized in that** the material mixture is fed to the reactor in granulated form.

4. The method according to claim 3, **characterized in that** the material mixture fed to the reactor in granulated form comprises a particle size in the area of 0.5 to 4 mm.

5. The method according to one of the preceding claims, **characterized in that** the combustion product is grinded and is subsequently granulated by adding an auxiliary granulating material.

6. The method according to claim 5, **characterized in that** the granulating is effected with a particle size in the area of 0.5 to 4 mm.

7. The method according to one of the preceding claims, **characterized in that** the alkali compounds and/or alkaline earth compounds and/or quartz compounds and/or the auxiliary granulating material are/is added at least in parts in the form of appropriate waste materials and/or residual materials or substances produced thereof.

8. The method according to claim 7, **characterized in that** the alkali compounds and/or alkaline earth compounds and/or quartz compounds and/or the auxiliary granulating material are/is added at least in parts in the form of fine slate or substances produced thereof.

9. The method according to one of the preceding claims, **characterized in that** the material mixture and/or the auxiliary granulating material are/is mechanically activated by finest grinding.

10. The method according to one of the preceding claims, **characterized in that** elemental sulfur is added to the combustion product.

## Revendications

1. Procédé pour l'obtention d'un engrais contenant du phosphore à partir de farine animale, **caractérisé en ce que** la farine animale est mélangée avec des composés de métal alcalin et/ou alcalino-terreux et/ou de quartz en un mélange de matériaux et celui-ci est ensuite calciné à une température d'au moins 1100°C dans un four tubulaire rotatif, la farine animale fournissant elle-même au moins une partie de l'énergie nécessaire pour la calcination et une exploitation de la chaleur de procédé dans un autre procédé ayant lieu.

2. Procédé selon la revendication 1, **caractérisé en ce que** le mélange de matériaux est introduit dans le réacteur sous forme de poudre.

3. Procédé selon la revendication 1, **caractérisé en ce que** le mélange de matériaux est introduit dans le réacteur sous forme granulée.

4. Procédé selon la revendication 3, **caractérisé en ce que** le mélange de matériaux introduit dans le réacteur sous forme granulée présente une grosseur de granule dans la plage de 0,5 à 4 mm.

5. Procédé selon l'une quelconque des revendications précédentes, **caractérisé en ce que** le produit de calcination est broyé et ensuite granulé avec addition d'un adjuvant de granulation.

6. Procédé selon la revendication 5, **caractérisé en ce que** la granulation est réalisée avec une grosseur de granule dans la plage de 0,5 à 4 mm.

7. Procédé selon l'une quelconque des revendications précédentes, **caractérisé en ce que** les composés de métal alcalin et/ou alcalino-terreux et/ou de quartz et/ou l'adjuvant de granulation sont ajoutés au moins partiellement sous forme de déchets et/ou de substances résiduelles appropriées ou de substances obtenues à partir de ceux-ci.

8. Procédé selon la revendication 7, **caractérisé en ce que** les composés de métal alcalin et/ou alcalino-terreux et/ou de quartz et/ou l'adjuvant de granulation sont ajoutés au moins partiellement sous forme de schiste fin ou de substances obtenues à partir de celui-ci.

9. Procédé selon l'une quelconque des revendications précédentes, **caractérisé en ce que** le mélange de matériaux et/ou l'adjuvant de granulation sont activés mécaniquement par un broyage fin.

10. Procédé selon l'une quelconque des revendications précédentes, **caractérisé en ce que** le produit de calcination est additionné de soufre élémentaire.
